**Europäisches Patentamt**

**European Patent Office**

**Office européen des brevets**

(19)

(11) Veröffentlichungsnummer : **0 381 941 B1**

(12)

# EUROPÄISCHE PATENTSCHRIFT

(45) Veröffentlichungstag der Patentschrift :
09.09.92 Patentblatt 92/37

(51) Int. Cl.$^5$ : **B65G 21/06, B65G 21/00**

(21) Anmeldenummer : **90100610.6**

(22) Anmeldetag : **12.01.90**

(54) **Ständer für einen Bandförderer.**

(30) Priorität : **10.02.89 DE 3903971**

(43) Veröffentlichungstag der Anmeldung :
**16.08.90 Patentblatt 90/33**

(45) Bekanntmachung des Hinweises auf die
Patenterteilung :
**09.09.92 Patentblatt 92/37**

(84) Benannte Vertragsstaaten :
**AT BE CH DE DK ES FR GB GR IT LI LU NL SE**

(56) Entgegenhaltungen :
**EP-A- 0 122 573**
**AT-B- 0 358 469**
**DE-B- 1 914 462**

(73) Patentinhaber : **Geppert, Helmut**
**Niederfeld 12**
**W-5162 Niederzier-Krauthausen (DE)**

(72) Erfinder : **Geppert, Helmut**
**Niederfeld 12**
**W-5162 Niederzier-Krauthausen (DE)**

(74) Vertreter : **Liermann, Manfred**
**Schillingsstrasse 335**
**W-5160 Düren (DE)**

Jouve, 18, rue Saint-Denis, 75001 PARIS

## Beschreibung

Die Erfindung betrifft einen Ständer eines Bandförderers mit mindestens einer Ständerplatte zur Verbindung eines Förderbandrahmens eines Bandförderers mit je einem Standbein mindestens eines dem Förderbandrahmen zugeordneten Ständers, wobei das Standbein mittels eines durch eine Öffnung in der Ständerplatte hindurchgeführten Gelenkbolzens schwenkbar an der Ständerplatte angeordnet und mittels einer im Abstand zum Gelenkbolzen durch ein sich kreisbogenförmig mit einer Gelenkachse als Mittelpunkt erstreckendes Langloch in der Ständerplatte hindurchgeführten Klemmschraube in einer Schwenkposition festklemmbar ist.

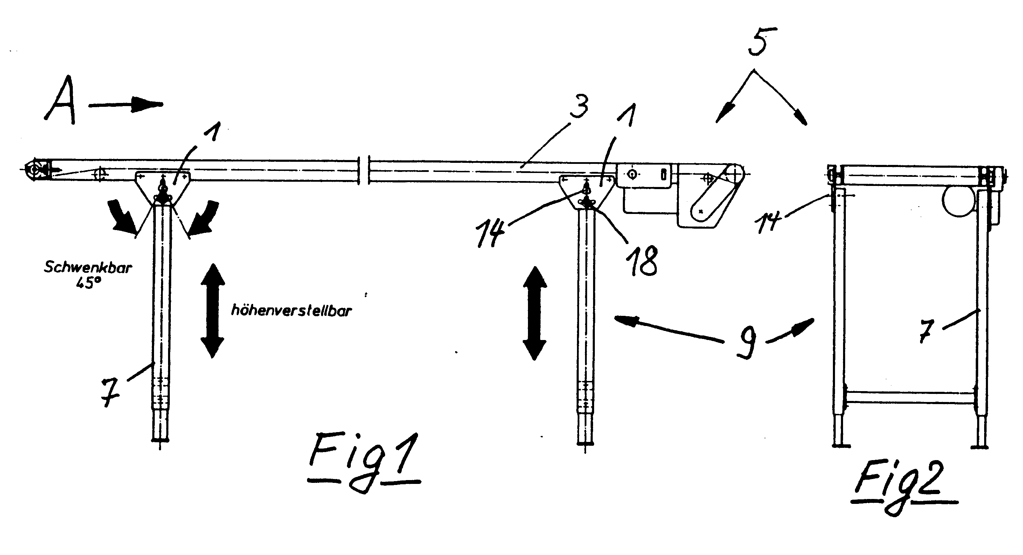

Eine Ständerplatte der vorbeschriebenen Art ist bspws. bekannt geworden durch das europäische Patent mit der Veröffentlichungsummer 0 122 573. In den Figuren 1 und 2 dieser europäischen Patentschrift sind die angesprochenen Ständerplatten mit dem Bezugszeichen 47 versehen. Solche Ständerplatten haben sich durchaus bewährt und ermöglichen es, auf sehr einfache und schnelle Weise die entsprechenden Förderbandrahmen der zugeordneten Bandförderer auf unterschiedliche Neigungswinkel einzustellen, wobei sie hierbei sehr einfach ausrichtbar sind. Die beschriebene Ausbildung der bekannten Ständerplatte begünstigt erheblich die universelle Verwendbarkeit solcher Bandförderer. Solche Bandförderer werden sehr häufig in fertigmontiertem Zustand verladen und zum Kunden transportiert. Hierbei kann es vorkommen, daß die entsprechenden Klemmschrauben, mit denen die zugeordneten Standbeine an der Ständerplatte festgeklemmt werden, nicht genügend angezogen werden, oder aber, daß zusätzlich oder trotz genügend starkem Anzug der gen. Klemmschrauben die verladenen Bänder mit zu hohen Lasten belegt werden, so daß in beiden Fällen die Beschleunigungsstöße während des Transportes dafür sorgen, daß sich unerwünschterweise die Standbeine bei festgezogenen Klemmschrauben verstellen oder, je nach Konstruktion des verladenen Bandförderers, vollständig einklappen, so daß es zu zum Teil erheblichen Transportschäden am verladenen Bandförderer kommt. Die Vermeidung der Fertigmontage und die Durchführung der Fertigmontage erst beim Kunden ist zur Vermeidung der gen. Transportschäden keine Alternative, weil hierdurch der Kunde gezwungen wäre, um Montagekosten zu vermeiden, die entsprechende Montage selber vorzunehmen, so daß letztlich die Montagekosten beim Kunden doch anfallen, oder aber, daß der Hersteller einen Monteur zur Endmontage entsenden muß, wodurch wiederum der Preis solcher kleinen Bandförderer nachteilig beeinflußt wird. Darüberhinaus wünscht aber auch vielfach der Kunde die benutzungsfertige Anlieferung solcher Bandförderer.

Die gen. Schwierigkeiten treten auch bei Waagerecht-Förderbänder mit zwei oder mehr Ständern am Betriebsort mitunter dann auf, wenn aufgrund eines Standortwechsels ein voheriges Lösen der Klemmschrauben oder gar eine Demontage der Ständer mit nachfolgender Montage stattgefunden hat.

Ausgehend von der vorbeschriebenen Situation liegt der Erfindung damit die Aufgabe zugrunde, die vorbeschriebenen Mängel zu beseitigen und einen Ständer vorzuschlagen, der bei einfachstem Aufbau und ohne gegenüber den bisher benötigten Bauelementen zusätzliche Bauelemente ein ungewolltes Wegklappen des Ständers z.B. auf dem Transport zuverlässig verhindert.

Diese Aufgabe ist ausgehend von einem Ständer der eingangs beschriebenen Art dadurch gelöst, daß die Öffnung als Langloch ausgebildet ist, wobei ein weiteres Langloch sich in gleicher Richtung und auf gleicher Mittellinie erstreckend im kreisbogenförmig sich erstreckenden Langloch mündet.

Diese einfache Ergänzung der Ständerplatte des Ständers ermöglicht eine sichere, formschlüssige, mechanische Arretierung des Förderbandrahmens des Bandförderers vorzugsweise in waagerechter Richtung. Natürlich ist auch eine solche mechanische Arretierung in einer anderen als der waagerechten Richtung möglich, wenn die Langlöcher in entsprechender Schwenklage angeordnet werden.

Nach einer Ausgestaltung der Erfindung wird vorgeschlagen, daß dem ersten kreisbogenförmig sich erstreckenden Langloch diametral gegenüberliegend und konzentrisch zur Gelenkachse ein weiteres ebensolches Langloch zugeordnet ist, in welchem ein weiteres senkrecht zum Kreisbogen angeordnetes Langloch mündet, dessen Mittellinie mit der Mittellinie des Langloches für den Gelenkbolzen zusammenfällt und wobei alle drei auf gleicher Mittellinie liegenden Langlöcher ausgehend von der Gelenkachse bzw. dem Schnittpunkt der Mittellinie mit der Mittellinie der kreisbogenförmig sich erstreckenden Langlöcher sich in gleicher Richtung ausdehnen. Die beiden sich diamteral gegenüberliegenden kreisbogenförmig sich erstreckenden Langlöcher sorgen für günstigere Hebelverhältnisse, so daß bei gleicher Klemmkraft der verwendeten Klemmschrauben eine größere Sicherheit gegen Verschwenken erreicht wird. Gleichzeitig bleibt es möglich, auch hier in der waagerechten Lage eine sichere mechanische Arretierung zu erreichen.

Schließlich ist nach der Erfindung noch vorgeschlagen, daß ein kreisbogenförmig sich erstreckendes Langloch zwischen der Mittelachse und dem der Befestigungsseite der Ständerplatte abgewandten Ende der Ständerplatte vorgesehen ist, dessen darin einmündendes Langloch sich in Richtung auf die Gelenkachse zu erstreckt. Dies ist eine besonders günstige Anordnung, weil bei dieser Anordnung die mechanische Arretierung in der zugeordneten Schwenklage, vorzugsweise der Horizontallage der Förderbandrahmens, von der Schwerkraft unterstützt wird, die dafür sorgt, daß die zugeordneten Einrichtungen die gewünschte Arretierlage zueinander einnehmen.

Die Erfindung soll anhand der beigefügten Zeichnungen, die Ausführungsbeispiele zeigen, näher erläutert werden.

Es zeigen:

Figur 1 Waagerecht angeordnetes Band in Seitenansicht mit zwei unabhängigen Ständern.

Figur 2 Ansicht in Richtung des Pfeils A nach Figur 1

Figur 3 Ansicht wie Figur 1 jedoch mit Mittelständer

Figur 4 Ansicht in Richtung des Pfeils B nach Figur 3

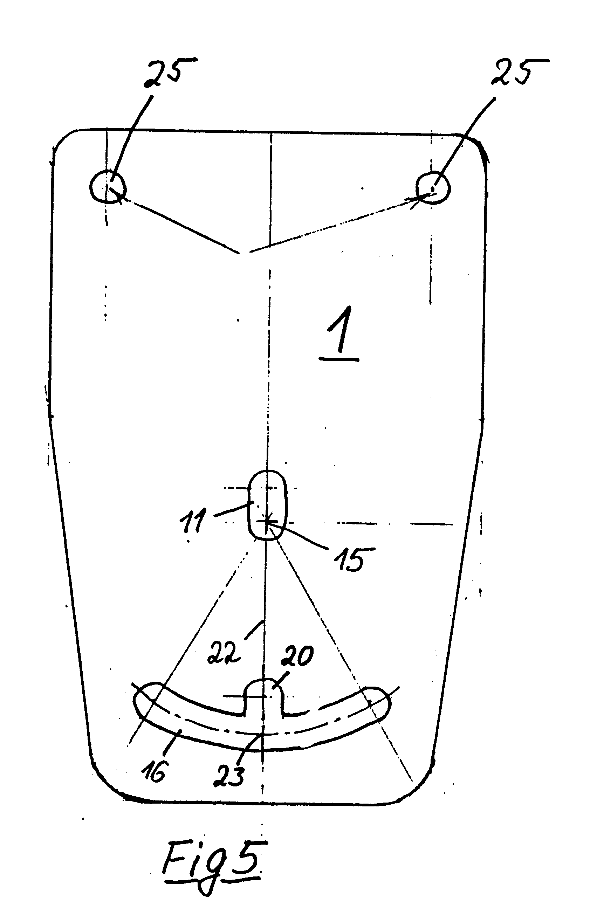

Figur 5 Ständerplatte in Ansicht

Figur 6 Variante einer Ständerplatte in Ansicht

In Figur 1 sind die wesentlichen Bauelemente eines einfachen Bandförderers zu erkennen. Ein horizontal angeordneter Förderbandrahmen 3 bekannter Bauart, der in üblicher Weise über nicht näher bezeichnete Antriebswalzen und Umlenkwalzen sowie über einen entsprechenden Antrieb für ein Förderband verfügt, ist auf zwei Ständern 9 in gewünschter Höhe abgestützt und in der Horizontalen gehalten. Zur Verbindung der einzelnen Standbeine 7 der Ständer 9 mit dem Förderbandrahmen 3 ist für jedes Standbein 7 eine Ständerplatte 1 vorgesehen, die in an sich bekannter Weise an ihrer einen Seite z.B. über Schraubverbindungen am Förderbandrahmen 3 jeweils befestigt ist. Hierzu weist eine solche Ständerplatte 1 bspws. zwei durchgehende Bohrungen 25 auf, durch die Schraubenbolzen durch die Ständerplatte 1 und bspws. auch den Förderbandrahmen 3 hindurchgeführt werden können, so daß auf einen entsprechenden Schraubenbolzen auf der anderen Seite eine entsprechende Mutter aufgesetzt werden kann, so daß die Ständerplatte 1 mit dem Förderbandrahmen 3 fest verbunden ist.

In zentraler Anordnung weist die Ständerplatte 1 ausgehend von einer Gelenkbolzenachse 15 ein Langloch 11 auf, das sich etwa vertikal zur Längserstreckung des Förderbandrahmens 3 erstreckt. Durch dieses Langloch 11 hindurch ist ein Gelenkbolzen 14 geführt, der auf der einen Seite einen nicht näher bezeichneten Kopf aufweist, der nicht mehr durch das Langloch 11 hindurch paßt und der auf der anderen Seite je durch ein Standbein 7 eines Ständers 9 hindurchgeführt ist, so daß auch auf der durchgeführten Seite des Gelenkbolzens 14 bspws. eine Kontermutter aufgesetzt werden kann.

Im Abstand eines gewünschten Radius von der Gelenkachse 15 verläuft ein kreisbogenförmig sich erstreckendes Langloch 16, durch welches eine Klemmschraube 18 (siehe Fig. 1) hindurchgeführt ist. Diese Klemmschraube 18 weist wieder einen genügend großen Schraubenkopf auf, der nicht durch das Langloch 16 hindurch paßt. Die Klemmschraube 18 kann nun bspws. in ein entsprechendes Gewinde eines Standbeins 7 hineingeschraubt oder durch ein entsprechendes Durchgangsloch durch das Standbein hindurchgeführt und erst auf der Rückseite mittels einer Mutter verschraubt sein. Wird diese Verschraubung angezogen, so ist das Standbein 7 in der jeweiligen Position festgeklemmt. Hierdurch ist eine sogen. kraftschlüssige Verbindung hergestellt. Zur Herstellung der gewünschten formschlüssigen Arretierung wird einfach der Gelenkbolzen 14 und die Klemmschraube 18 etwas gelöst und das zugeordnete Standbein 7 oder ggfls. auch der gesamte zugeordnete Ständer 9 so geschwenkt, daß das jeweilige Standbein 7 oder der Ständer 9 sich etwa rechtwinklig zur Erstreckung des Förderbandrahmens 3 erstreckt. In dieser Position sorgt die Schwerkraft dafür, daß der Gelenkbolzen 14 und die Klemmschraube 8 sich jeweils im Langloch 11 bzw. 20 verschieben, so daß dann, wenn die Klemmschraube 18 sich am anderen Ende des Langlochs 20 befindet, eine Schwenkbewegung des Ständers 9 oder eines Standbeines 7 nicht mehr möglich ist. Ein leichtes Nachziehen des Gelenkbolzens 14 und der Klemmschraube 18 sorgen in dieser Position für eine absolut sichere formschlüssige mechanische Arretierung. In diesem arretierten Zustand kann der fertig montierte Bandförderer zum Transport verladen werden. Ein Einknicken oder eine Verstellung der Ständer und als Folge entsprechende Beschädigungen des Bandförderers sind nicht mehr möglich.

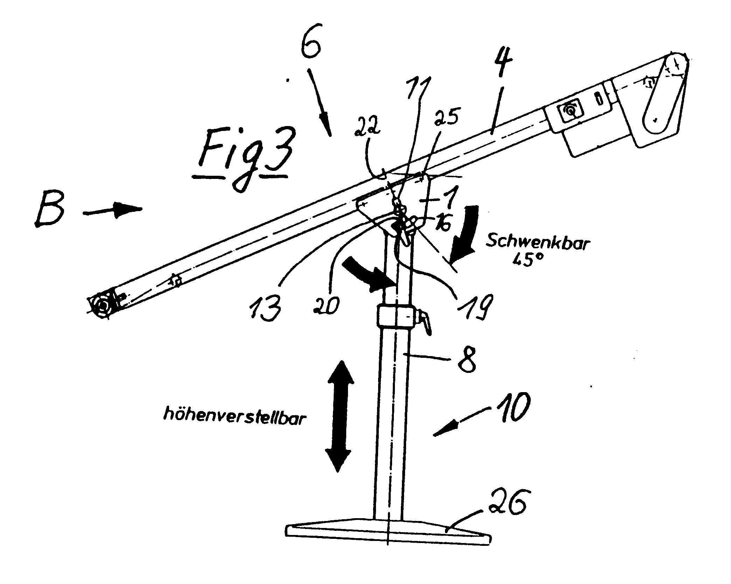

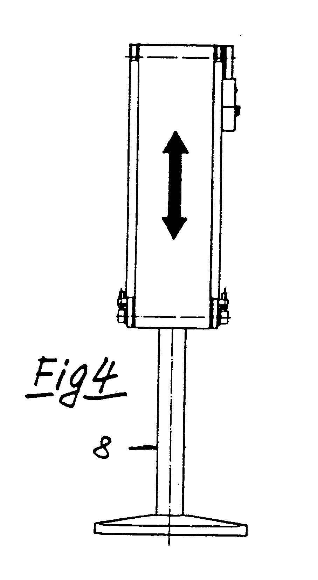

Die gleichen Vorteile werden natürlich auch bei einem Bandförderer nach den Figuren 3 und 4 bei entsprechender Ausbildung des dort verwendeten einzelnen Ständers 10 mit zugehöriger Ständerplatte 1 erreicht. Das Standbein 8 des Ständers 10 dieses Bandförderers 6 ist im Gegensatz zum Ständer 9 des Bandförderers 5 als einbeiniger Ständer 10 ausgeführt, der an seinem bodenseitigen Ende einen Ständerfuß 26 aufweist, um dem Bandförderer 6 einen sicheren Stand zu geben. Der Förderbandrahmen 4 weist hierbei an beiden Längsseiten in sich gegenüberliegender Anordnung eine Ständerplatte 1 auf, die am Förderbandrahmen 4 ebenso befestigt werden kann, wie dies zum Förderbandrahmen 3 des Bandförderers 5 bereits beschrieben wurde.

Das Standbein 8 weist an seinem oberen Ende ein nicht mehr dargestelltes und nicht mehr bezeichnetes Querjoch auf, in welches von beiden Seiten die jeweils durch das entsprechende Langloch 11 hindurchgeführten Gelenkbolzen 13 eingesetzt sind, so daß diese Gelenkbolzen 13 die gleiche Funktion erfüllen, wie die Gelenkbolzen 14, welche zum Bandförderer 5 bereits in ihrer Anordnung und Funktion beschrieben wurden.

Gleiches gilt auch für die Anordnung der Klemmschraube 19, die beim Bandförderer 6 als Knebelschraube ausgeführt sein kann.

Auch beim Bandförderer 6 ist wieder sehr einfach eine zuverlässige formschlüssige und mechanische Arretierung dadurch erreichbar, daß man z.B. bei auf dem Boden stehenden Ständer 10 die Klemmschraube 19 und den Gelenkbolzen 13 leicht löst und den Förderbandrahmen 4 in die Horizontale schwenkt. In der Horizontalen sorgt dann die Schwerkraft dafür, daß der ganze Förderbandrahmen 4 um den Betrag der Länge der Langlöcher 11 und der Langlöcher 20 nach unten rutscht und dadurch sich einerseits der Gelenkbolzen 13 im Langloch 11 verschiebt und sich andererseits die Klemmschraube 19 in das Langloch 20 hineinsetzt. In dieser Anordnung liegt bereits eine formschlüssige Arretierung vor. Wird nun in dieser Aerretierungslage der Gelenkbolzen 13 und die Klemmschraube 19 festgezogen, dann wird auch verhindert, daß sich der Förderbandrahmen 4 noch im Rahmen des evtl. vorhandenen Spieles der einzelnen ineinandergreifenden Bauteile bewegt.

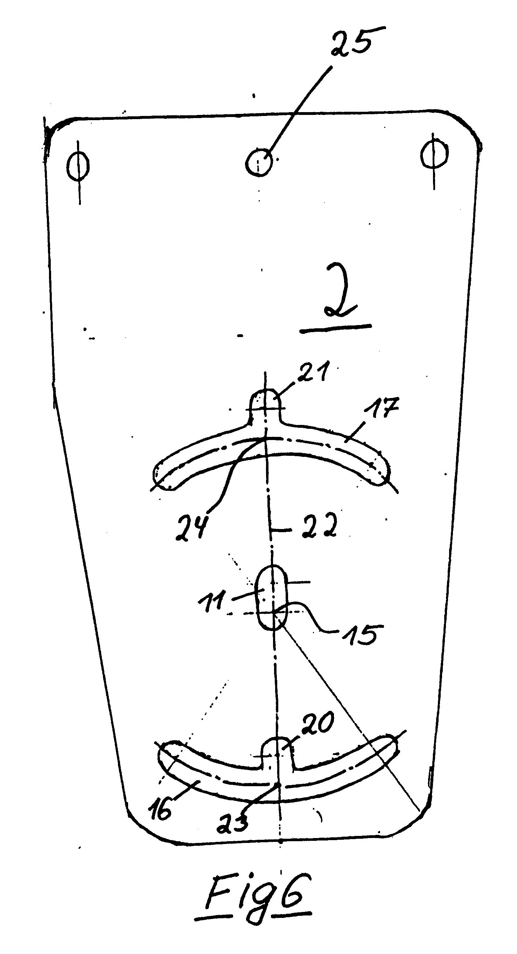

Gerade aber bei Bandförderern nach der Bauart des Bandförderers 6 ist auch eine sichere Befestigung des Förderbandrahmens 4 in jeder anderen möglichen und zulässigen Schwenklage notwendig. Um dies zu erreichen könnten dort an Stelle der Ständerplatten 1 Ständerplatten 2, wie sie in Fig. 6 dargestellt sind, benutzt werden. Auch diese Ständerplatten können wieder durch die Bohrungen 25 hindurch bspws. über Schrauben in an sich bekannter Weise mit dem Förderbandrahmen 4 fest verbunden sein. Es weist diese Ständerplatte 2 nach Fig. 6 auch, ebenso wie die Ständerplatte 1, ein Langloch 11 auf, bei dem die Gelenkachse 15 wieder den Drehmittelpunkt bezügl. des kreisbogenförmig angeordneten Langloches 16 bildet. Ergänzend ist jedoch in dem gen. Langloch 16 in diametral gegenüberliegender Anordnung ein weiteres kreisbogenförmig verlaufendes Langloch 17 vorgesehen, das ein dem Langloch 20 zum Langloch 16 entsprechendes Langloch 21 aufweist, welches im kreisbogenförmig angeordneten Langloch mündet. Die Langlöcher 20, 11, 21 sind hierbei so angeordnet, daß sie alle auf einer gemeinsamen Mittellinie 20 liegen, die durch das Langloch 11 verläuft und die Mittellinien der kreisbogenförmig angeordneten Langlöcher 16 und 17 in den Punkten 23 bzw. 24 schneidet. Hierbei ist in Fig. 6 zu erkennen, daß sich das Langloch 20, ausgehend vom kreisbogenförmig angeordneten Langloch 16 und zu diesem senkrecht verlaufend, in Richtung der Gelenkachse 15 erstreckt, während sich das Langloch 21, ausgehend vom kreisbogenförmig angeordneten Langloch 17 und zu diesem senkrecht verlaufend, von der Gelenkachse 15 wegerstreckt. Hierdurch ergibt sich in dieser Anordnung wieder die gleiche formschlüssige, mechanische Arretierungsmöglichkeit, wie sie schon zur Ständerplatte 1 beschrieben wurde. Aber auch die kraftschlüssige Feststellung in irgendeiner Winkellage, die von den kreisbogenförmig angeordneten Langlöchern 16 und 17 ermöglicht wird, ist aufgrund des doppelten Hebelverhältnisses und der Verwendung von nunmehr zwei Klemmschrauben erheblich verbessert.

Um die formschlüssige Arretierung wieder zu beseitigen, zur Einstellung einer evtl. gewünschten Schwenklage, ist es lediglich erforderlich, die Gelenkbolzen 13 bzw. 14 sowie die Klemmschrauben 18 bzw. 19 leicht zu lösen und danach den jeweiligen Förderbandrahmen 3 bzw. 4 etwas anzuheben. Dies ist bei Bandförderern der leichten Bauart, wie sie die Bandförderer 5 und 6 darstellen, problemlos möglich. Die Ständer 9 bzw. 10 fallen dann um den entsprechenden Betrag der Länge der Langlöcher 11 und 20 und ggfls. 21 nach unten, so daß die Mittelachse des Gelenkbolzens 14 mit der Gelenkachse 15 zusammenfällt, wobei sich dann die Klemmschrauben 18 bzw. 19 in den jeweils zugeordneten kreisbogenförmig verlaufenden Langlöchern 16 und ggfls. 17 befinden, so daß in dieser Position die gewünschte Schwenkbewegung durchgeführt und anschließend durch wiederanziehen der gen. Schrauben in der gewünschten Position festgelegt werden kann.

Liste der verwendeten Bezugszeichen

| | |
|---|---|
| 1 | Ständerplatte |
| 2 | Ständerplatte |
| 3 | Förderbandrahmen |
| 4 | Förderbandrahmen |
| 5 | Bandförderer |
| 6 | Bandförderer |
| 7 | Standbein |
| 8 | Standbein |
| 9 | Ständer |
| 10 | Ständer |
| 11 | Langloch |
| 12 | unbenutzt |
| 13 | Gelenkbolzen |
| 14 | Gelenkbolzen |
| 15 | Gelenkachse |

16    kreisbogenförmiges Langloch
17    kreisbogenförmiges Langloch
18    Klemmschraube
19    Klemmschraube
20    Langloch
21    Langloch
22    Mittellinie
23    Schnittpunkt
24    Schnittpunkt
25    Bohrung
26    Ständerfuß


**Patentansprüche**

1.  Ständer eines Bandförderers mit mindestens einer Ständerplatte (1) zur Verbindung eines Förderbandrahmens (4) eines Bandförderers mit je einem Standbein (8) mindestens eines dem Förderbandrahmen zugeordneten Ständers, wobei das Standbein mittels eines durch eine Öffnung (11) in der Ständerplatte hindurchgeführten Gelenkbolzens (13) schwenkbar an der Ständerplatte angeordnet und mittels einer im Abstand zum Gelenkbolzen durch ein sich kreisbogenförmig mit einer Gelenkachse als Mittelpunkt erstreckendes Langloch (16) in der Ständerplatte hindurchgeführten Klemmschraube in einer Schwenkposition festklemmbar ist, dadurch gekennzeichnet, daß die Öffnung als Langloch (11) ausgebildet ist, wobei ein weiteres Langloch (20) sich in gleicher Richtung und auf gleicher Mittellinie (22) erstreckend im kreisbogenförmig sich erstreckenden Langloch (16) mündet.

2.  Ständer nach Anspruch 1, dadurch gekennzeichnet, daß dem ersten kreisbogenförmig sich erstreckenden Langloch (16) diametral gegenüberliegend und konzentrisch zur Gelenkachse (15) ein weiteres ebensolches Langloch (17) zugeordnet ist, in welchem ein weiteres senkrecht zum Kreisbogen angeordnetes Langloch (21) mündet, dessen Mittellinie mit der Mittellinie (27) des Langloches (11) für den Gelenkbolzen (14) zusammenfällt und wobei alle drei auf gleicher Mittellinie (22) liegenden Langlöcher (11,20,21), ausgehend von der Gelenkachse (15) bzw. dem Schnittpunkt (23,24) der Mittellinie (22) mit der Mittellinie der kreisbogenförmig sich erstreckenden Langlöcher (16,17), sich in gleicher Richtung ausdehnen.

3.  Ständer nach Anspruch 2, dadurch gekennzeichnet, daß ein kreisbogenförmig sich erstreckendes Langloch (16) zwischen der Gelenkachse (15) und dem der Befestigungsseite der Ständerplatte (2) abgewandten Ende der Ständerplatte (2) vorgesehen ist, dessen darin einmündendes Langloch (20) sich in Richtung auf die Gelenkachse (15) zu erstreckt.


**Claims**

1.  Stand for a belt conveyor, with at least one support plate (1) for the connection of a conveyor belt frame (4) of a belt conveyor to respective support legs (8) of at least one stand associated with the conveyor belt frame, wherein the support leg is pivotable relative to the support plate by means of a hinge bolt (13) extending through an aperture (11) in the support plate and can be clamped in a pivoted position by means of a clamping screw spaced from the hinge bolt and extending through an elongate hole (16) in the support plate, said elongate hole extending arcuately about a hinge axis as a centre, characterised in that the aperture is an elongate hole (11), and wherein a further elongate hole (20) extending in the same direction as the aperture and on the same centre line (22) merges into the arcuately extending elongate hole (16).

2.  Stand according to claim 1, characterised in that the first arcuately extending elongate hole (16) is associated with a further like elongate hole (17) which is diametrically opposite the first hole and concentric with respect to the hinge axis (15), with an additional elongate hole (21) which is arranged perpendicular to the arc merging into said further elongate hole (17), wherein the centre-line of the additional elongate hole (21) coincides with the centre-line (22) of the elongate hole (11) for the hinge bolt (14), and wherein all three elongate holes (11, 20, 21) lying on the same centre-line (22) extend in the same direction on a line from the hinge axis (15) through the points of intersection (23, 24) of the centre-line (22) with the centre-lines of the arcuately extending elongate holes (16, 17).

3. Stand according to claim 2, characterised in that an arcuately extending elongate hole (16) is provided between the hinge axis (15) and the end of the support plate (2) which is remote from the fixing side of the support plate (2), with the elongate hole (20) which merges into said elongate hole (16) extending in the direction towards the hinge axis (15).

**Revendications**

1. Support d'un convoyeur à bande, comportant au moins une plaque de support (1) pour relier un cadre (4) de convoyeur à bande à un pied (8) d'un ou plusieurs supports associés audit cadre, le pied étant disposé au niveau de la plaque de support pour pouvoir pivoter à l'aide d'un boulon d'articulation (13) introduit dans un orifice (11) ménagé dans la plaque de support, et étant apte à être bloqué dans une position de pivotement à l'aide d'une vis de serrage introduite, à une certaine distance du boulon d'articulation, dans un trou oblong (16) ménagé dans la plaque de support et s'étendant en forme d'arc de cercle avec, pour centre, un axe d'articulation, caractérisé en ce que l'orifice est conçu comme un trou oblong (11), étant précisé qu'il est prévu un second trou oblong (20), s'étendant dans le même sens et sur la même ligne médiane (22), qui débouche dans le trou oblong (16) s'étendant en forme d'arc de cercle.

2. Support selon la revendication 1, caractérisé en ce qu'il est prévu, associé au premier trou oblong (16) s'étendant en forme d'arc de cercle, un second trou oblong identique (17) diamétralement opposé et concentrique par rapport à l'axe d'articulation (15), dans lequel débouche un second trou oblong (21), disposé perpendiculairement à l'arc de cercle, dont la ligne médiane coïncide avec la ligne médiane (27) du trou oblong (11) prévu pour le boulon d'articulation (14), étant précisé que les trois trous oblongs (11, 20, 21) situés sur la même ligne médiane (22) s'étendent dans le même sens à partir de l'axe d'articulation (15), respectivement de l'intersection (23, 24) de la ligne médiane (22) et de la ligne médiane des trous oblongs (16, 17) s'étendant en forme d'arc de cercle.

3. Support selon la revendication 2, caractérisé en ce qu'il est prévu un trou oblong (16) qui s'étend en forme d'arc de cercle entre l'axe d'articulation (15) et l'extrémité de la plaque de support (2) opposée au côté de fixation de ladite plaque (2), et dont le trou oblong (20) débouchant dans le premier s'étend en direction de l'axe d'articulation (15).

A →

5

3   1

1

14

14
18

Schwenkbar
45°

höhenverstellbar

9

7

7

7

Fig1

Fig2

EP 0 381 941 B1

_Fig3_

B →

6

11

22    25

4

1

16

Schwenkbar
45°

13    20    19

8

höhenverstellbar

10

26

Fig4

8 —

Fig 5

Fig 6